(19) Europäisches Patentamt
European Patent Office
Office européen des brevets

(11) Veröffentlichungsnummer: **0 078 238**
**B1**

(12) # EUROPÄISCHE PATENTSCHRIFT

(45) Veröffentlichungstag der Patentschrift: **12.08.87**

(51) Int. Cl.4: **C 08 K 3/32**, C 08 L 67/02, H 01 B 3/42

(21) Anmeldenummer: **82810436.4**

(22) Anmeldetag: **22.10.82**

(54) **Thermoplastische Formmasse und deren Verwendung.**

(30) Priorität: **28.10.81 CH 6879/81**

(43) Veröffentlichungstag der Anmeldung: **04.05.83 Patentblatt 83/18**

(45) Bekanntmachung des Hinweises auf die Patenterteilung: **12.08.87 Patentblatt 87/33**

(84) Benannte Vertragsstaaten: **CH DE FR GB IT LI NL**

(56) Entgegenhaltungen:
**DE-A-2 133 895**
**GB-A-2 057 454**

**Die Akte enthält technische Angaben, die nach dem Eingang der Anmeldung eingereicht wurden und die nicht in dieser Patentschrift enthalten sind.**

(73) Patentinhaber: **CIBA- GEIGY AG, Klybeckstrasse 141, CH- 4002 Basel (CH)**

(72) Erfinder: **Breitenfellner, Franz, Dr., Konrad-Adenauer- Strasse 56, D-6140 Bensheim 1 (DE)**
Erfinder: **Kainmüller, Thomas, Dr., Am Kümmelberg 1, D-6145 Lindenfels/Odenwald (DE)**

**EP 0 078 238 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft eine flammfeste Formmasse auf Basis eines thermoplastischen Polyesters, die ein im wesentlichen wasserfreies Calciumphosphat und gegebenenfalls z. B. Füllstoffe und verstärkende Füllstoffe enthält, und deren Verwendung zur Herstellung geformter Gegenstände.

Thermoplastische Polymere sind wertvolle Formmassen, die eine breite Anwendung in der Technik gefunden haben. Um verschiedenen Anwendungszwecken zu genügen, ist es üblich, den Polymeren Füllstoffe zuzugeben, mit denen bestimmte mechanische und elektrische Eigenschaften verbessert werden können.

Zur Erhöhung der Wärmeformbeständigkeit und Steifigkeit können verstärkende Füllstoffe, wie z. B. Glasfasern, zugegeben werden und zur Verminderung der Brennbarkeit werden flammhemmende Mittel einverleibt. Mit diesen Zusätzen wird jedoch die Kriechstromfestigkeit vermindert, eine bei Anwendungen im Elektrobereich wichtigen Eigenschaft. Ein weiteres Problem in diesem Bereich ist die Korrosivität auf Kontaktmetalle von bei erhöhten Anwendungstemperaturen aus den Formkörpern austretenden Gasen.

Es sind bereits Füllstoffe zur Verbesserung der Kriechstromfestigkeit bekannt, z. B. Kaolin (DE-OS 2 616 754), Calcium- oder Bariumsulfat (DE-OS 2 524 121) und Metallborate (DE-OS 2 534 762).

In der DE-OS 2 133 895 werden nicht flammgehemmte, für Folienherstellung geeignete thermoplastische Formmassen offenbart, welche vorzugsweise weniger als 5000 ppm eines inerten Füllstoffs, u.a. Calciumphosphats, enthalten. Durch die Füllstoffzugabe wird eine Verbesserung der Aufwickelmerkmale der Folien erreicht.

Aufgabe vorliegender Erfindung ist es, unverstärkte oder verstärkte flammwidrig ausgerüstete thermoplastische Polyester-Formmassen mit verbesserter Kriechstromfestigkeit und einer Verminderung der Korrosivität auf Kontaktmetalle bereitzustellen. Die in der DE-OS 2 133 895 beschriebenen Massen erfüllen diese Aufgabe nicht.

Gegenstand vorliegender Erfindung ist eine flammfeste Formmasse enthaltend 99,99-60 Gew.% eines thermoplastischen Polyesters, 0,01-40 Gew.% eines im wesentlichen wasserfreien Calciumphosphats und 3-30 Gew.%, bezogen auf den Polyester, eines flammhemmenden Zusatzes, der dem Kunststoff als Mischkomponente einverleibt ist, oder der als reaktives Monomer in die Polyestermoleküle eingebaut ist.

Als Polyester eignen sich lineare Polyester, die bevorzugt kristallin bzw. teilkristallin sind und in diesem Fall insbesondere Schmelzpunkte von mindestens 150°C aufweisen. Sie können jedoch auch in amorpher Form vorliegen, wobei dann der Polyester bevorzugt eine Glasumwandlungstemperatur von mindestens 70°C, besonders mindestens 100°C, aufweist. Die Intrinsic Viskosität der Polyester beträgt bevorzugt mindestens 0,6 dl/g, insbesondere mindestens 0,8 dl/g.

Bei den Polyestern kann es sich um Homo- oder Mischpolyester handeln, die aus aliphatischen, cycloaliphatischen oder aromatischen Dicarbonsäuren und Diolen oder Hydroxycarbonsäuren aufgebaut sind. Ferner sind auch Mischungen dieser Polyester geeignet. Ihre Zusamensetzung richtet sich im wesentlichen nach den gewünschten Eigenschaften für einen bestimmten Verwendungszweck.

Die aliphatischen Dicarbonsäuren können 2 bis 40 C-Atome, die cycloaliphatischcn Dicarbonsäuren 6 bis 10 C-Atome, die aromatischen Dicarbonsäuren 8 bis 14 C-Atome, die aliphatischen Hydroxycarbonsäuren 2 bis 12 C-Atome und die aromatischen wie cycloaliphatischen Hydroxycarbonsäuren 7 bis 14 C-Atome enthalten.

Die aliphatischen Diole können 2 bis 12 C-Atome, die cycloaliphatischen Diole 5 bis 8 C-Atome und die aromatischen Diole 6 bis 16 C-Atome enthalten. Als aromatische Diole werden jene bezeichnet, bei denen zwei Hydroxygruppen an einen oder verschiedene aromatische Kohlenwasserstoffreste gebunden sind.

Ferner ist es möglich, dass die Polyester mit geringen Mengen, z. B. 0,1 bis 3 Mol%, bezogen auf die vorhandenen Dicarbonsäuren, mehr als zweifunktionelle Monomeren (z. B. Pentaerythrit oder Trimellitsäure) verzweigt sind. Bei Polyestern aus mindestens 3 Monomeren können diese statistisch verteilt sein, oder es kann sich um Blockpolymere handeln.

Geeignete Dicarbonsäuren sind lineare und verzweigte gesättigte aliphatische Dicarbonsäuren, aromatische Dicarbonsäuren und cycloaliphatische Dicarbonsäuren.

Als aliphatische Dicarbonsäuren kommen jene mit 2 bis 40 C-Atomen in Frage, z. B. Oxalsäure, Malonsäure, Bernsteinsäure, alkylierte Malon- und Bernsteinsäure wie Dimethylmalonsäure, Octadecylbernsteinsäure, Pimelinsäure, Adipinsäure, Trimethyladipinsäure, Sebacinsäure, Azelainsäure und Dimersäuren (Dimerisationsprodukte von ungesättigten aliphatischen Carbonsäuren, wie Ölsäure).

Als cycloaliphatische Dicarbonsäuren kommen in Frage: 1,3-Cyclobutandicarbonsäure, 1,3-Cyclopentandicarbonsäure, 1,3- und 1,4-Cyclohexandicarbonsäure, 1,3- und 1,4-Dicarboxylmethylcyclohexan, 4,4'-Dicyclohexyldicarbonsäure.

Als geeignete aromatische Dicarbonsäuren kommen in Frage:

Insbesondere Terephthalsäure, Isophthalsäure, Phthalsäure, sowie

1,3-, 1,4-, 2,6- oder 2,7-Naphthalindicarbonsäure, 4,4'-Diphenyldicarbonsäure, 4,4'-Diphenylsulfoncarbonsäure, 1,1,3-Trimethyl-5-carboxyl-3-(p-carboxylphenyl)-indan, 4,4'-Diphenylätherdicarbonsäure, Bis-p-(carboxylphenyl)methan.

Bevorzugt sind die aromatischen Dicarbonsäuren, unter ihnen besonders Therephthalsäure, Isophthalsäure und Phthalsäure.

Weitere geeignete Dicarbonsäuren sind jene, die -CO-NH-Gruppen enthalten; sie sind in der DT-OS 2 414 349 beschrieben. Auch Dicarbonsäuren, die N-heterocyclische Ringe enthalten, sind geeignet, z. B. solche, die sich von carboxylalkylierten, carboxylphenylierten oder carboxybenzylierten Monoamino-s-triazindicarbonsäuren (vgl. DT-OS 2 121 184 und 2 533 675), Mono- oder Bishydantoinen, gegebenenfalls halogenierten Benzimidazolonen oder Parabansäure ableiten. Die Carboxylalkylgruppe kann hierbei 3 bis 20 C-Atome enthaltem.

Geeignete aliphatische Diole sind die linearen und verzweigten aliphatischen Glykole, besonders die mit 2 bis 12, insbesondere 2 bis 6 Kohlenstoffatomen im Molekül, z. B. Äthylenglykol, 1,2- und 1,3-Propylenglykol, 1,2-, 1,3-, 2,3- oder 1,4-Butandiol, Pentylglykol, Neopentylglykol, 1,6-Hexandiol, 1,12-Dodecandiol. Ein geeigentes cycloaliphatisches Diol ist z. B. 1,4-Dihydroxycyclohexan. Weitere geeignete aliphatische Diole sind z. B. 1,4-Dihydroxymethylcyclohexan, aromatisch-aliphatische Diole wie p-Xylylenglykol oder 2,5-Dichlor-p-xylylenglykol, 2,2-(β-Hydroxyäthoxyphenyl)propan sowie Polyoxaalkylenglykol wie Diäthylenglykol, Triäthylenglykol oder Polyäthylenglykol. Die Alkylendiole sind bevorzugt linear und enthalten insbesondere 2 bis 4 Kohlenstoffatome.

Bevorzugte Diole sind die Alkylendiole, 1,4-Dihydroxycyclohexan und 1,4-Dihydroxymethylcyclohexan. Insbesondere bevorzugt sind Äthylenglykol und 1,4-Butandiol.

Weitere geeignete aliphatische Diole sind die β-hydroxyalkylierten, besonders β-hydroxyäthylierten Bisphenole wie 2,2-Bis[4'-(β-hydroxyäthoxy)-phenyl]-propan. Weitere Bisphenole sind unten genannt.

Eine weitere Gruppe von geeignetem aliphatischen Diolen sind die in den deutschen Offenlegungsschriften 1 812 003, 2 342 432, 2 342 372 und 2 453 326 beschriebenen heterocyclischen Diole. Beispiele sind: N,N'-Bis-(β-hydroxyäthyl-5,5-dimethyl)hydantoin, N,N'-Bis-(β-hydroxypropyl-5,5-dimethyl)hydantoin, Methylen-bis-[N,N'-(β-hydroxyäthyl)-5-methyl-5-äthylhydantoin], Methylen-bis-[N-(β-hydroxyäthyl)-5,5-dimethylhydantoin], N,N'-Bis-(β-hydroxyäthyl)-benzimidazolon, -(tetrachlor)-benzimidazolon oder -(tetrabrom)-benzimidazolon.

Als aromatische Diole kommen einkernige Diphenole in Betracht und besonders zweikernige, die an jedem aromatischen Kern eine Hydroxylgruppe tragen. Unter aromatisch werden bevorzugt kohlenwasserstoffaromatische Reste, wie z. B. Phenylen oder Naphthylen, verstanden. Neben z. B. Hydrochinon sind besonders die Bisphenole zu nennen, die durch die folgende Formel dargestellt werden können:

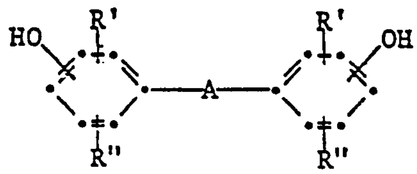

Die Hydroxylgruppen können sich in m-Stellung, besonders aber in p-Stellung befinden, R' und R'' können in dieser Formel Alkyl mit 1 bis 6 C-Atomen, Halogen, wie Chlor oder Brom, und insbesondere Wasserstoffatome bedeuten. A kann für eine direkte Bindung stehen oder O, S, $SO_2$, gegebenenfalls substituiertes Alkyliden, Cycloalkyliden oder Alkylen bedeuten.

Beispiele für gegebenenfalls substituiertes Alkyliden sind:

Äthyliden, 1,1- oder 2,2-Propyliden, 2,2-Butyliden, 1,1-Isobutyliden, Pentyliden, Hexyliden, Heptyliden, Octyliden, Dichloräthyliden, Trichloräthyliden.

Beispiele für gegebenenfalls substituiertes Alkylen sind Methylen, Äthylen, Phenylmethylen, Diphenylmethylen, Methylphenylmethylen. Beispiele für Cycloalkyliden sind Cyclopentyliden, Cyclohexyliden, Cycloheptyliden und Cyclooctyliden.

Beispiele für Bisphenole sind: Bis-(p-hydroxyphenyl)-äther oder -thioäther, Bis-(p-hydroxyphenyl)-sulfon, Bis-(p-hydroxyphenyl)-methan, 1,2-Bis-(p-hydroxyphenyl)-äthan, 1-Phenyl-bis-(p-hydroxyphenyl)-methan, Diphenyl-bis-(p-hydroxyphenyl)-methan, Diphenyl-bis-(p-hydroxyphenyl)-methan, 2,2-Bis-(4'-hydroxy-3'-dimethylphenyl)-propan, 1,1- oder 2,2-Bis-(p-hydroxyphenyl)-butan, 1,1-Dichlor- oder 1,1,1-Trichlor-2,2-bis-(p-hydroxyphenyl)-äthan, 1,1-Bis-(p-hydroxyphenyl)-cyclopentan und besonders 2,2-Bis-(p-hydroxyphenyl)-propan (Bisphenol-A) und 1,1-Bis-(p-hydroxyphenyl)-cyclohexan (Bisphenol-C).

Geeignete Polyester von Hydroxycarbonsäuren sind z. B. Polycaprolacton, Polypivalolacton oder die Polyester von 4-Hydroxycyclohexancarbonsäure oder 4-Hydroxybenzoesäure.

Polyester mit aromatischen Dicarbonsäuren haben die grösste Bedeutung erlangt, insbesondere die Polyalkylenterephthalate. Bevorzugt sind daher erfindungsgemässe Formmassen, in denen der Polyester aus mindestens 30 Mol%, bevorzugt mindestens 40 Mol%, aromatischen Dicarbonsäuren und zu mindestens 30 Mol%, vorzugsweise mindestens 40 Mol% aus Alkylendiolen mit bevorzugt 2 bis 12 C-Atomen aufgebaut ist, bezogen auf den Polyester.

Insbesondere ist in diesem Fall das Alkylendiol linear und enthält 2 bis 6 C-Atome, wie z. B. Äthylen-, Tri-, Tetra- oder Hexamethylenglykol und die aromatische Dicarbonsäure Terephthal- und/oder Isophthalsäure. Besonders bevorzugt sind als Polyester Polyäthylen- und Poly-1,4-butylenterephthalat sowie Copolyester auf der Basis von Polyäthylen- und Poly-1,4-butylenterephthalat.

Die erfindungsgemässe Formmasse kann zusätzlich 5-55 Gew.-% eines Füllstoffes und/oder eines verstärkenden (faserförmigen) Füllstoffes enthalten, z. B. Asbestfasern, Kohlenstoffasern oder insbesondere

Glasfasern. Die Gesamtmenge an Füllstoffen und Calciumphosphat beträgt höchstens 60 Gew.-%, bezogen auf die Gesamtmasse. Die Füllstoffe einschliesslich Calciumphosphat können mit einem Haftvermittler beschichtet sein um deren Bindung an den Polyester zu verbessern.

Die erfindungsgemässe Formmasse enthält vorzugsweise 8 bis 20 Gew.-%, bezogen auf den Polyester, eines flammhemmenden Zusatzes.

Geeignete flammhemmende Zusätze sind z. B. organische Halogenverbindungen, besonders Chlor- oder Bromverbindungen, die alleine oder zusammen mit synergistisch wirkenden Verbindungen mit Elementen der fünften Hauptgruppe des Periodensystems, besonders von Phosphor- und Antimonverbindungen, insbesondere Antimontrioxid, verwendet werden.

Flammschutzmittel auf der Basis von organischen chlor- und/oder besonders bromhaltigen Verbindungen sind bekannt. Wie bereits erwähnt kann es sich hierbei um solche handeln, die dem Kunststoff als Mischkomponente einverleibt sind, oder um solche, die als reaktive Monomere in die Polymermoleküle eingebaut sind. Beispiele für letztere sind Tetrachlorphthalsäureanhydrid, Dichlortetraphthalsäure oder deren Niederalkylester, Tetrabromphthalsäureanhydrid, Tetrabrombisphenol-A, N,N'-Bis-(β-hydroxyäthyl)tetrachlor- oder tetrabrombenzimidazolon.

Weitere Beispiele für chlor- und/oder bromhaltige Verbindungen sind:

Polytribromstyrol, Polypentabromstyrol, Decabromdiphenyl, Tetrabromdiphenyl, Hexabromdiphenyläther, Octabromdiphenyläther, Decabromdiphenyläther, Tetrabromdiphenylsulfid, Hexabromdiphenylsulfon, 3-(2',4',6'-Tribromphenoxy)-1,2-propandiol, Di- oder Tetrabromphthalsäure bzw. deren Anhydride, Dibromterephthalsäure, hydroxyäthyliertes Di - oder Tetrabrombisphenol-A, Tetrabrom-1,4-(dihydroxymethyl)-benzol, Tetrabrombenzimidazolon, N,N"-Alkylen-bis-tetrabromphthalimid sowie die chloranalogen Verbindungen. weitere organische Halogenverbindungen sind z. B. in der deutschen Offenlegungsschrift 2 242 450 beschrieben.

Die Menge an Calciumphosphat beträgt in der erfindungsgemässen Formmasse 0,01 bis 40, vorzugweise 0,1 bis 30 Gew.-%, bezogen auf das Polymer. Zur Verbesserung der Kriechstromfestigkeit wird im allgemeinen eine Menge von 0,3 bis 40 Gew.-% einverleibt, während zur Verminderung der Korrosivität 0,01 bis 4 Gew.-% genügen können.

Bei dem erfindungsgemäss verwendeten Calciumphosphat handelt es sich zweckmässig um ein feinteiliges und im wesentlichen wasserfreies Phosphat. Gegebenenfalls sind die Phosphate daher vor der Zugabe zu trocknen. Die Teilchengrösse des Phosphates kann z. B. 0,1 bis 100 µm, vorzugsweise 1 bis 50 µm, betragen. Bei den Calciumphosphaten kann es sich um Hydrogenphosphat, Phosphat, Hydroxyidapatit, Halogenid-, besonders Fluorid- oder Choridapatit, ein Metaphosphat, ein Polyphosphat oder ein Ultraphosphat und Gemische von Phosphaten handeln. Beispiele sind:

$CaHPO_4$, $Ca_3(PO_4)_2$, $Ca_5(PO_4)_3(OH)$, $Ca_5(PO_4)_3(F,Cl)$, $Ca_2P_2O_7$, $Ca_3(P_3O_9)_2$, $Ca_2(P_4O_{12})$, $Ca_5(P_3O_{10})_2$ und Calciumpolyphosphat.

Bevorzugt sind $CaHPO_4$, $Ca_3(PO_4)_2$, $Ca_5(PO_4)_3(OH)$ und $Ca_5(PO_4)_3(F,Cl)$.

Die thermoplastischen Polyester sind bekannt und handelsüblich oder sie können nach bekannten Verfahren der Technik hergestellt werden.

Die Herstellung der erfindungsgemässen Formmassen erfolgt ebenfalls nach in der Technik üblichen Methoden durch Einarbeiten der Zusätze in den thermoplastischen Polyester während oder nach der Polykondensation durch Zugabe zu der Reaktionsmasse bzw. durch Umgranulieren.

Es können auch weitere übliche Zusätze zugegeben werden, z. B. weitere Füllstoffe wie Talk Glimmer Metallpulver Kieselsäureaerosol, Kaolin, Calciumcarbonat, Dolomit, Silikate oder Glaskugeln, anorganische oder organische Pigmente, optische Aufheller, Mattierungsmittel, Gleitmittel, Entformungshilfsmittel, kristallisationsfördernde Mittel, Antioxidantien, Lichtschutzmittel und Verarbeitungsstabilisatoren.

Die erfindungsgemässen Formmassen weisen eine verbesserte Kriechstromfestigkeit auf, was sich besonders günstig bei verstärkten und flammwidrig ausgerüsteten Formmassen auswirkt. Ferner ist die Korrosivität auf Kontaktmetalle vermindert und die Flammhemmung ist insofern verbessert, als das Abtropfen beim Brennen unterdrückt wird.

Die Formmassen können nach gebräuchlichen Formgebungsverfahren, wie Giessen, Pressen, Spritzgiessen und Extrudieren, zu Gebrauchsgegenständen aller Art verarbeitet werden. Beispiele für solche Gegenstände sind technische Apparateteile, Apparategehäuse, Haushaltgeräte, Sportgeräte, Elektroisolationen, Automobilteile, Schaltungen, Platten, Filme und Halbzeuge, die spanabhebend verformt werden können. Ein besonderes Anwendungsgebiet ist aufgrund der guten elektrischen Eigenschaften die Herstellung von Formkörpern für die Elektro-, Elektronik- und Haushaltgeräteindustrie.

Die folgenden Beispiele erläutern die Erfindung näher:

**Beispiel 1**:

In 90 Gew.-% Polybutylenterephthalat (PBTP) (Viskositätszahl nach DIN 53728/3: 135 $cm^3/g$), welches als Flammschutzmittel 10 Gew.-% Decabromdiphenyloxid und 5 Gew.-% $Sb_2O_3$ enthält, werden mit Hilfe eines Labor-Kokneters bei 250° C 10 Gew.-% $Ca_5(PO_4)_3(OH)$ eingearbeitet und die Formmasse granuliert.

Nach dem Trocknen des Granulates erfolgt die Verarbeitung zu Probekörpern (Platten 120 x 80 x 4 mm) unter

folgenden Bedingungen:
Zylindertemperaturen 250° C, Werkzeugstemperatur 80° C, Zykluszeit 45 sec.
An den Formkörpern werden die in nachfolgender Tabelle angeführten Kriechstromfestigkeitswerte nach DIN 53480, Verfahren KB und KC bestimmt.
Die Kriechstromfestigkeit ist gegenüber glasfaserverstärktem PBTP wesentlich verbessert.

**Beispiele 2-4**:

Zu je 80 Gew.-% einer PBTP-Formmasse, welche aus 56,5 Gew.-% PBTP (Viskositätszahl 100 $cm^3/g$), 9 Gew.-% Decabromdiphenyloxid, 4,5 Gew.-% $Sb_2O_3$ und 30 Gew.-% Glasfasern besteht, werden analog wie in den vorhergehenden Beispielen mit Hilfe eines Labor-Kokneters je 20 Gew.-% folgender Calciumphosphate zugesetzt:
Beispiel 2: 20 Gew.-% $Ca_5(PO_4)_3(OH)$
Beispiel 3: 20 Gew.-% $Ca_3(PO_4)_2$
Beispiel 4: 20 Gew.-% $CaHPO_4$
Nach dem Trocknen der granulierten Formmasse erfolgt ihre Verarbeitung zu Formkörpern entsprechend dem vorhergehenden Beispiel. Die Kriechstromfestigkeiten, in nachfolgender Tabelle angegeben, sind wesentlich höher als für Formmassen ohne Phosphatzusatz.
An Formkörpern mit den Abmessungen 127 x 12,7 x 1,6 mm aus den Beispielen 2 und 4 wird auch die Brennbarkeit nach UL-94 ermittelt. Die Herstellung der Formkörper durch Spritzgiessen erfolgt dabei ebenfalls unter den in Beispiel 1 angeführten Verarbeitungsbedingungen.
Gemäss der UL-94-Prüfung weisen die Formkörper folgende Brennbarkeitsklassen auf: Beispiel 2: Klasse V-0, nicht tropfend, Beispiel 4: Klasse V-O, nicht tropfend.
Bei einer Formmasse ohne Phosphatzusatz vermögen abfallende Tropfen Baumwollwatte zu entzünden.

**Tabelle**

| Beispiel Nr. | Zusammensetzung | Kriechstromfestigkeit DIN 53480 Verf. KB | Verf.KC |
|---|---|---|---|
| 1 | 90 Gew.-% PBTP mit 10 Gew.-% Decabromdiphenyloxid und 5 Gew.-% $Sb_2O_3$, bezogen auf das Polymer 10 Gew.-% $Ca_5(PO_4)_3(OH)$ | 400 | >600 |
| 2 | 80 Gew.-% PBTP, verstärkt, flammgehemmt * 20 Gew.-% $Ca_5(PO_4)_3(OH)$ | | 525 |
| 3 | 80 Gew.-% PBTP, verstärkt, flammgehemmt * 20 Gew.-% $Ca_3(PO_4)_2$ | | 525 |
| 4 | 80 Gew.-% PBTP, verstärkt, flanmgehemmt * 20 Gew.-% $CaHPO_4$ | | 475 |

* 56,5 Gew.-% PBTP, 9 Gew.-% Decabromdiphenyloxid, 4,5 Gew.-% $Sb_2O_3$, 30 Gew.-% Glasfasern

**Beispiel 5**:

In je einen Glasbehälter von 1 l Inhalt werden je 25 Normkleinstäbe (6 x 4 x 50 mm) von Formmassen mit folgender Zusammensetzung mit je einem Metallplättchen aus versilbertem Messing und Zinnbronze bei 170° C während 15 Tagen in einem Wärmeschrank gelagert:
50,5 Gew.-% PBTP (Viskositätszahl 82 $cm^3/g$)
12,5 Gew.-% Polytribromstyrol
5,0 Gew.-% $Sb_2O_3$
2,0 Gew.-% $Ca_3(PO_4)_2$
30,0 Gew.-% Glasfasern
Der Glasbehälter ist dabei abgeschlossen und die beiden Metallplättchen hängen über den Kunststoffproben. Metallplättchen behalten ihren metallischen Glanz ohne sichtbare Korrosion. Bei entsprechenden Formmassen ohne Phosphatzusatz ist dagegen ein grauer bis schwarzer Belag gebildet.

**Beispiel 6:**

In gleicher Weise wie in Beispiel 5 wird die Korrosionswirkung von Normkleinstäben an einer Formmasse mit folgender Zusammensetzung ermittelt:

91,7 Gew.-% PBTP-Copolymer mit 7 Mol-%*, 1,3 Bis(2-hydroxyethyl)-4,5,6,7-tetrabrombenzimidazolon-diol als Cokomponente

* bezogen auf Dimethylterephthalat

8,0 Gew.-% $Sb_2O_3$

0,3 Gew.-% $Ca_5(PO_4)_3(OH)$

Es wird keine Korrosionswirkung beobachtet, während phosphatfreie Proben zu deutlichen Verfärbungen der Metallplättchen führen.

**Patentansprüche**

1. Flammfeste Formmasse enthaltend
(a) 99,99 - 60 Gew.-% eines thermoplastischen Polyesters,
(b) 0,01 - 40 Gew.-% eines im wesentlichen wasserfreien Calciumphosphats und
(c) 3-30 Gew.-%, bezogen auf den Polyester, eines flammhemmenden Zusatzes, der dem Kunststoff als Mischkomponente einverleibt ist, oder der als reaktives Monomer in die Polyestermoleküle eingebaut ist.

2. Formmasse gemäss Anspruch 1, dadurch gekennzeichnet, dass sie 8 bis 20 Gew,-%, bezogen auf das Polymer, eines flammhemmenden Zusatzes enthält.

3. Formmasse gemäss Anspruch 1, dadurch gekennzeichnet, dass der Polyester linear und insbesondere ein Polyalkylenterephthalat ist.

4. Formmasse gemäss Anspruch 3, dadurch gekennzeichnet, dass der Polyester ein Polyäthylen- oder Poly-1,4-butylenterephthalat oder ein Copolyester auf der Basis von Polyäthylen- oder Poly-1,4-butylenterephthalat ist.

5. Formmasse gemäss Anspruch 1, dadurch gekennzeichnet, dass sie neben dem flammhemmenden Zusatz zusätzlich 5 bis 55 Gew.-%, bezogen auf den Polyester, eines Füllstoffes und/oder verstärkenden Füllstoffes enthält, wobei die Gesamtmenge an Calciumphosphat und Füllstoffen nicht mehr als 60 Gew.-% beträgt.

6. Formmasse gemäss Anspruch 1, dadurch gekennzeichnet, dass das Calciumphosphat ein Hydrogenphosphat, Phosphat, Hydroxid- oder Halogenidapatit, ein Metaphosphat, ein Polyphosphat oder ein Ultraphosphat ist.

7. Formmasse gemäss Anspruch 6, dadurch gekennzeichnet, dass das Calciumphosphat $Ca_3HPO_4$, $Ca_3(PO_4)_2$, $Ca_5(PO_4)_3(OH)$, $Ca_5(PO_4)_3(F,Cl)$ ist.

8. Verwendung von Formmassen gemäss Anspruch 1 zur Herstellung von geformten Gegenständen.

9. Verwendung eines im wesentlichen wasserfreien Calciumphosphates zur Verbesserung der Kriechstromfestigkeit und zur Verminderung der Korrosivität flammfest ausgerüsteter thermoplastischer Polymere.

**Claims**

1. A flame-proofed moulding composition comprising
(a) 99.99 to 60 % by weight of a thermoplastic polyester,
(b) 0.01 to 40 % by weight of a substantially anhydrous calcium phosphate, and
(c) 3 to 30 % by weight, based on the polyester, of a flame-retardant additive which is incorporated into the plastic as mixture component or into the polyester molecule as reactive monomer.

2. A moulding composition according to claim 1, which contains 8 to 20 % by weight, based on the polymer, of a flame-retardant additive.

3. A moulding composition according to claim 1, wherein the polyester is a linear polyester and, preferably, a polyalkyleneterephthalate.

4. A moulding composition according to claim 3, wherein the polyester is a polyethylene terephthalate or a poly-1,4-butylene terephthalate, or a copolyester based on polyethylene terephthalate or poly-1,4-butylene terephthalate.

5. A moulding composition according to claim 1, which contains in addition to the flame-retardant additive, 5 to 55 % by weight, based on the polymer, of a filler and/or reinforcing filler, the total amount of calcium phosphate and fillers being not more than 60 % by weight.

6. A moulding composition according to claim 1, wherein the calcium phosphate is a hydrogen phosphate, phosphate, hydroxide apatite or halide apatite, a metaphosphate, a polyphosphate or an ultraphosphate.

7. A moulding composition according to claim 6, wherein the calcium phosphate is $CaHPO_4$, $Ca_3(PO_4)_2$, $Ca_5(PO_4)_3(OH)$ or $Ca_5(PO_4)_3(F,Cl)$.

8. The use of a moulding composition according to claim 1 for producing shaped objects.

9. The use of a substantially anhydrous calcium phosphate to improve the tracking resistance of thermoplastic polymers, and to reduce the corrosiveness of thermoplastic polymers which have been rendered non-inflammable.

**Revendications**

1. Matière à mouler ininflammable comprenant:
a) de 99,99 à 60 % en poids d'un polyester thermoplastique,
b) de 0,01 à 40 % en poids d'un phosphate de calcium sensiblement anhydre, et
c) de 3 à 30 % en poids, par rapport au polyester, d'un additif ignifugeant incorporé à la matière synthétique en tant que constituant du mélange ou incorporé dans la molécule de polyester en tant que monomère réactif.
2. Matière à mouler selon la revendication 1 caractérisée en ce qu'elle contient de 8 à 20 % en poids, par rapport au polymère, d'un additif ignifugeant.
3. Matière à mouler selon la revendication 1 caractérisée en ce que le polyester est linéaire et en ce qu il s'agit d'un poly-(téréphtalate d'alkylène).
4. Matière à mouler selon la revendication 3 caractérisée en ce que le polyester est un poly-(téréphtalate d'éthylène ou de butylène - 1,4), ou un copolyester à base de poly-(téréphtalate d'éthyléne ou de butylène - 1,4).
5. Matière à mouler selon la revendication 1 caractérisée en ce qu'elle contient, en plus de l'additif ignifugeant, de 5 à 55 % en poids, par rapport au polyester, d'une charge et/ou d'une charge renforçante, la quantité totale de phosphate de calcium et de charges ne dépassant pas 60 % en poids.
6. Matière à mouler selon la revendication 1 caractérisée en ce que le phosphate de calcium est un hydrogénophosphate, un phosphate, une hydroxy- ou halogénoapatite, un métaphosphate, un polyphosphate ou un ultraphosphate.
7 Matière à mouler selon la revendication 6 caractérisée en ce que le phosphate de calclum est $CaHPO_4$, $Ca_3(PO_4)_2$, $Ca_5(PO_4)_3(OH)$ ou $Ca_5(PO_4)_3(F,Cl)$.
8. Utilisation de matières à mouler selon la revendication 1 pour la fabrication d'articles moulés.
9. Utilisation d'un phosphate de calcium sensiblement anhydre pour améliorer la résistance aux courants de fuite et diminuer la corrosivité de polymères thermoplastlques ignifugés.